# FASCICULE DE BREVET EUROPEEN

(11) **EP 2 550 153 B1**
(45) Date de publication et mention de la délivrance du brevet: **07.01.2015**
(21) Numéro de dépôt: 11718424.2
(22) Date de dépôt: 24.03.2011
(51) Int. Cl.: B29C 70/52, B29C 70/54, F16C 7/02, B29L 31/06

(54) **PROCEDE DE REALISATION EN CONTINU D'UNE PIECE DE LIAISON EN MATERIAU COMPOSITE**
VERFAHREN ZUR KONTINUIERLICHEN HERSTELLUNG EINES VERBINDUNGSTEILS AUS EINEM VERBUNDSTOFF
METHOD FOR THE CONTINUOUS PRODUCTION OF A CONNECTING PART MADE FROM COMPOSITE MATERIAL

(30) Priorité: 25.03.2010 FR 1052142; 25.03.2010 FR 1052141
(43) Date de publication de la demande: 30.01.2013
(73) Titulaire: Epsilon Composite, 33340 Gaillan (FR)
(72) Inventeur: NOGUES, Dominique, F-33990 Hourtin (FR); LOUART, Frédéric, F-33610 Cestas (FR); MAUMUS, Jean Pierre, F-33160 Saint Medard En Jalles (FR)
(74) Mandataire: Fantin, Laurent
(86) Numéro de dépôt international: PCT/FR2011/050626
(87) Numéro de publication internationale: WO 2011/117546

(56) Documents cités:
- EP-A1- 0 626 250
- EP-A1- 0 628 402
- DE-A1-102007 015 909
- FR-A1- 2 918 134
- GB-A- 2 096 530

## Description

La présente invention est relative à une pièce de liaison en matériau composite, ainsi qu'au procédé de réalisation de ladite pièce de liaison en matériau composite.

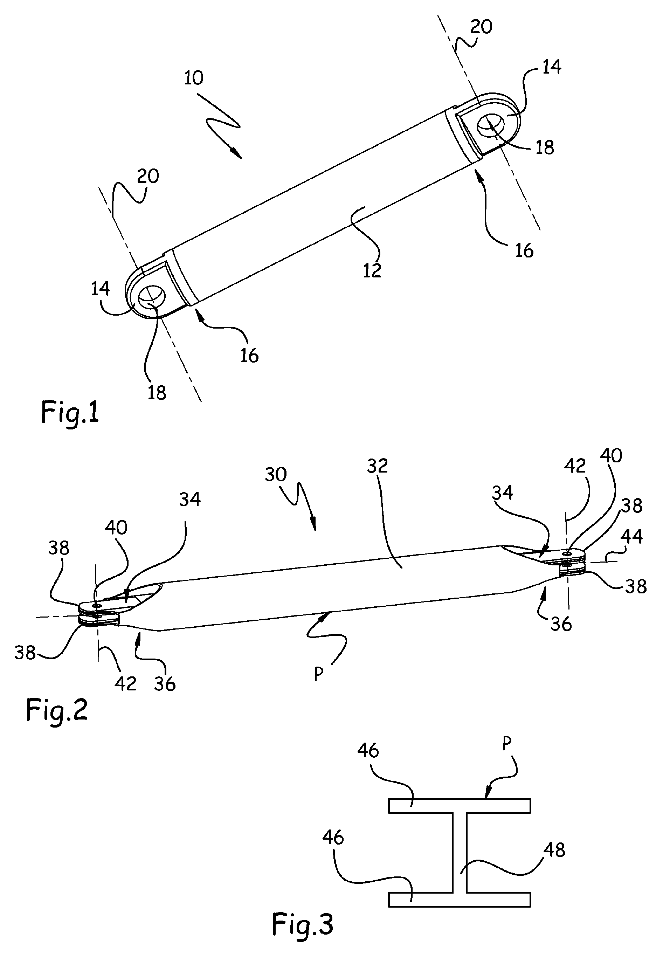

La figure 1 illustre une pièce de liaison 10 selon l'art antérieur, aussi dénommée bielle, et utilisée pour relier deux éléments.

De façon connue, une bielle 10 comprend un corps 12 allongé et au moins une chape 14 au niveau de chacune des extrémités 16 dudit corps.

Lesdites chapes 14 comportent chacune un alésage 18 réalisé selon un axe 20 sensiblement transversal à l'axe longitudinal du corps 12 de la bielle, ces alésages étant utilisés pour le passage de moyens de fixation aux éléments à relier.

Dans certaines applications, les bielles sont utilisées pour la réalisation de structures fortement sollicitées.

Une de ces applications, particulièrement visée par la présente invention, concerne la réalisation d'une partie de la structure d'un aéronef située dans les différents tronçons d'un aéronef, et faisant notamment partie de l'ossature située sous le plancher dudit aéronef.

Plus en détails, une telle partie de la structure d'un aéronef prend la forme de caissons.

Ainsi, une multitude de bielles de différentes longueurs sont assemblées sous forme de treillis pour assurer la tenue mécanique et la rigidité desdits caissons, ou plus directement en support au droit du plancher.

Bien entendu, lors des phases de vol de l'aéronef, les bielles du treillis participent à la reprise des efforts aérodynamiques subis par les ailes de l'aéronef et plus généralement par l'ensemble de la structure de l'aéronef. Aussi, il est connu que la structure d'un aéronef doit être la plus légère possible pour des raisons d'économie de carburant et d'augmentation de l'autonomie de vol de l'aéronef.

Les bielles doivent donc offrir des caractéristiques mécaniques leur permettant de reprendre des efforts de traction/compression et de flambage importants, avec des coefficients de sécurité particulièrement élevés au niveau des ailes, tout en demeurant les plus légères possibles.

En plus du compromis masse/caractéristiques mécaniques, les fabricants de bielles doivent conserver un rendement de production optimal.

Aussi, il est connu que l'utilisation de matériau composite permet généralement de répondre aux contraintes imposées aux fabricants pour la réalisation desdites bielles, les matériaux composites permettant la réalisation de bielles à corps creux, donc de masse réduite, avec des caractéristiques mécaniques équivalentes ou supérieures à celles des bielles en matériau métallique.

Ces contraintes sont vérifiées lors de plusieurs tests de qualification définis par le constructeur de l'aéronef et réalisés dans différentes conditions, par exemple à différentes températures, ou après des cycles de vieillissement chimique, notamment humide, ou encore après des cycles de fatigue mécanique. Dans le cas des bielles utilisées dans les caissons d'un aéronef, le treillis forme un assemblage hyperstatique et l'effort de qualification est déterminé par la raideur de la bielle, ce qui impose une fenêtre de dimensionnement relativement étroite : les bielles doivent comporter suffisamment de matière pour offrir les caractéristiques mécaniques requises sans toutefois dépasser une certaine section et présenter une raideur trop importante.

De plus, les bielles en matériau composite sont généralement plus sensibles aux chocs que les bielles en matériau métallique pour une même raideur.

Lesdites bielles en matériau composite, et plus particulièrement leurs corps, doivent néanmoins subir des tests de perforation et permettre la visualisation d'un défaut généré par un impact.

Enfin, et toujours en comparaison des bielles en matériau métallique, une autre difficulté du dimensionnement des bielles en matériau composite concerne la résistance des chapes desdites bielles aux pressions de matage.

Différentes bielles en matériau composite et différents procédés de réalisation desdites bielles ont été développés pour répondre à ces contraintes particulières.

Ainsi, un premier document de l'art antérieur consistant en une demande de brevet européen publiée sous la référence EP-1.213.526 divulgue un procédé de réalisation d'une bielle consistant à assembler deux embouts métalliques avec un corps creux en matériau composite, les embouts formant les chapes de ladite bielle.

La jonction entre les embouts métalliques et le corps en matériau composite est effectuée par l'intermédiaire d'un filetage encollé, les embouts métalliques présentant des surfaces filetées vissées dans les extrémités taraudées du corps creux.

En terme de rendement de production, ce premier procédé de réalisation n'est pas optimal car il nécessite plusieurs opérations précises d'usinage de deux pièces métalliques, ainsi que des étapes méticuleuses d'encollage et d'assemblage par vissage.

De plus, ce premier procédé ne permet pas la réalisation d'une bielle monolithique, c'est à dire dont le corps et les chapes sont venus simultanément de fabrication.

Un deuxième procédé, décrit dans la demande internationale de numéro de publication WO-2009/138660, prévoit la réalisation d'une bielle comprenant deux inserts de préférence métalliques comportant des alésages à leurs extrémités, une âme intercalée entre lesdits inserts et obtenue par moulage d'un composite comprenant des fibres de renforts noyées dans une matrice thermodurcissable ou thermoplastique, ainsi qu'une sangle ceinturant l'ensemble et constituée d'un enroulement filamentaire imprégné d'une matrice thermodurcissable ou thermoplastique, l'assemblage étant réalisé avec une précontrainte par compression de l'âme et par tension de la sangle.

Ce deuxième procédé de réalisation ne permet pas l'obtention d'une bielle dont le corps et les chapes viennent simultanément de fabrication dans un même matériau.

Aussi, les différents composants assemblés forment une pièce non homogène dont la cohésion est susceptible d'évoluer en raison d'une réalisation dans des matériaux différents.

De plus, les diverses étapes de fabrication diminuent le rendement de production d'un tel procédé.

Un troisième procédé, décrit dans la demande internationale publiée sous la référence WO-2010/000990, prévoit la réalisation d'une bielle à partir de préformes et consistant à disposer les préformes autour d'un support de façon que les bords de jonction desdites préformes se recouvrent, à lier lesdits bords de jonction par couture, et à extraire ledit support et à insérer à sa place un noyau de moulage avant mise de l'ensemble à l'intérieur d'un moule et injection de résine sous pression dans le moule suivi d'une polymérisation de la résine. Bien que pouvant permettre l'obtention d'une bielle dont le corps et les chapes viennent simultanément de fabrication dans un même matériau, ce troisième procédé comprend plusieurs opérations de fabrication dont l'étape de polymérisation qui allonge le temps de cycle de production de plusieurs heures.
Le document DE 10 2007 015909 divulgue un procédé de réalisation d'une pièce de liaison, notamment une bielle d'un aéronef, en matériau composite, ladite pièce de liaison comprenant au moins un corps creux et au moins une chape au niveau de chacune des extrémités dudit corps, caractérisé en ce que ledit corps et lesdites chapes de la pièce de liaison sont issues d'un unique profilé en matériau composite.

La présente invention vise à pallier les inconvénients de l'art antérieur et propose un procédé de réalisation d'une pièce de liaison, telle une bielle, dont le corps et les chapes viennent simultanément de fabrication dans un même matériau, ledit procédé comprenant un nombre réduit d'opérations diminuant les temps de cycle et donc les coûts de production de ladite pièce de liaison.

La présente invention a pour objectif la réalisation d'une pièce de liaison présentant de bonnes caractéristiques mécaniques, une masse réduite et un coût de fabrication minimal en comparaison des bielles de l'art antérieur.

A cet effet, l'invention a pour objet un procédé de réalisation d'une pièce de liaison, notamment une bielle d'un aéronef, en matériau composite, ladite pièce de liaison comprenant au moins un corps creux et au moins une chape au niveau de chacune des extrémités dudit corps, ledit corps et lesdites chapes de la pièce de liaison étant issus d'un unique profilé en matériau composite obtenu par un processus de fabrication en continu.

D'autres caractéristiques et avantages ressortiront de la description qui va suivre de l'invention, description donnée à titre d'exemple uniquement, en regard des dessins annexés sur lesquels :
- la figure 1 représente une vue en perspective d'une pièce de liaison selon l'art antérieur,
- la figure 2 représente une vue en perspective d'une pièce de liaison dans un premier mode de réalisation préféré selon l'invention,
- la figure 3 représente une section d'un profilé d'une pièce de liaison selon l'invention,
- la figure 4 représente une section d'un profilé d'une pièce de liaison dans un premier mode de réalisation préféré selon l'invention,
- la figure 5 représente une portion d'un profilé d'une pièce de liaison dans un premier mode de réalisation préféré selon l'invention,
- la figure 6 représente les découpes des chapes dans une portion d'un profilé d'une pièce de liaison dans un premier mode de réalisation préféré selon l'invention,
- la figure 7 représente des renforts rapportés au niveau des chapes d'un profilé d'une pièce de liaison dans un premier mode de réalisation préféré selon l'invention,
- la figure 8A représente une première variante d'une section d'un profilé d'une pièce de liaison dans un premier mode de réalisation préféré selon l'invention,
- la figure 8B représente une deuxième variante d'une section d'un profilé d'une pièce de liaison dans un premier mode de réalisation préféré selon l'invention,
- la figure 9 représente une troisième variante d'une section d'un profilé d'une pièce de liaison dans un premier mode de réalisation préféré selon l'invention,
- la figure 10 représente une quatrième variante d'une section d'un profilé d'une pièce de liaison dans un premier mode de réalisation préféré selon l'invention,
- la figure 11 représente une section des profilés d'une pièce de liaison dans un deuxième mode de réalisation préféré selon l'invention,
- la figure 12 représente une portion d'un premier profilé d'une pièce de liaison dans un deuxième mode de réalisation préféré selon l'invention,
- la figure 13 représente les découpes des chapes dans une portion d'un premier profilé d'une pièce de liaison dans un deuxième mode de réalisation préféré selon l'invention,
- la figure 14 représente l'assemblage d'un premier et d'un deuxième profilé d'une pièce de liaison dans un deuxième mode de réalisation préféré selon l'invention,
- la figure 15 représente une première variante d'une section d'un premier et d'un deuxième profilé d'une pièce de liaison dans un deuxième mode de réalisation préféré selon l'invention,
- la figure 16 représente une deuxième variante d'une section d'un premier et d'un deuxième profilé d'une pièce de liaison dans un deuxième mode de réalisation préféré selon l'invention,
- la figure 17 représente une troisième variante d'une section d'un premier et d'un deuxième profilé d'une pièce de liaison dans un deuxième mode de réalisation préféré selon l'invention.

La présente invention est relative à la fabrication de pièces de liaison devant présenter une masse minimale et offrir des caractéristiques mécaniques élevées. L'invention vise plus particulièrement la fabrication de pièces de liaison utilisées pour la réalisation de treillis assurant la rigidité des caissons situés dans différents tronçons d'un aéronef.

Bien entendu, cette application particulière n'est nullement limitative.

Certains matériaux composites permettent d'offrir des caractéristiques mécaniques très élevées pour une quantité de matière, et donc une masse, minimale, l'invention propose donc un procédé de réalisation d'une pièce de liaison en matériau composite.

Une telle pièce de liaison 30, notamment illustrée en figure 2, comprend au moins un corps creux 32 et au moins une chape 34 au niveau de chacune des extrémités 36 dudit corps.

Lesdites chapes 34 comprennent chacune au moins une oreille 38, deux de préférence, traversée par un alésage 40 réalisé selon un axe transversal 42 et sensiblement perpendiculaire par rapport à l'axe longitudinal 44 dudit corps 32. En raison des propriétés mécaniquement avantageuses du matériau composite choisi pour les besoins de l'invention, et détaillé ultérieurement dans la description, le corps 32 de la pièce de liaison peut être conçu creux.

Un tel corps 32 creux permet d'éviter que la pièce de liaison 30 ne soit trop lourde et ne présente une raideur trop importante, notamment en vue de la détermination du ou des efforts de qualification pour une application aéronautique.

Selon la présente invention, le corps 32 est défini comme la partie de la pièce de liaison 30 ayant pour fonction principale la reprise des efforts subis par ladite pièce dans l'assemblage où elle se situe.

Dans le cas d'une pièce de liaison 30 participant à l'assemblage du treillis d'un caisson situé dans différents tronçons d'un aéronef, le rôle dudit corps consiste principalement à reprendre des sollicitations de traction/compression afin d'éviter le flambage de ladite pièce de liaison.

Afin de diminuer fortement les coûts et les temps de cycle de production d'une pièce de liaison, dans le procédé de réalisation selon l'invention, ledit corps creux 32 et lesdites chapes 34 de la pièce de liaison 30 sont issus d'un unique profilé P en matériau composite.

De plus, et toujours dans l'objectif d'améliorer le rendement de production, ledit profilé P est obtenu par un processus de fabrication en continu.

Par profilé, l'invention entend une pièce de section constante produite en continu sur une seule ligne de production, les différentes opérations de la ligne de production du profilé étant réalisées les unes après les autres sans interruption. Un tel processus de fabrication en continu permet de réduire les temps et les coûts de production dudit profilé et donc les temps et les coûts de fabrication de la pièce de liaison.

De préférence, dans le procédé de réalisation selon l'invention, le processus de fabrication en continu dudit profilé P est la pultrusion consistant à tirer des fibres imprégnées d'une matrice au travers d'une filière chauffée où s'effectuent la mise en forme des fibres et la polymérisation ou la fusion et le compactage de la matrice.

Les fibres utilisées sont des fibres à hautes performances, notamment des fibres de carbone, et la matrice employée est en polymère organique, de nature thermodurcissable, par exemple en époxyde, en polyuréthane, ou en vinylester, ou de nature thermoplastique.

Ensuite, afin de conférer à la pièce de liaison 30 des caractéristiques mécaniques maximales pour une quantité de matière minimale, le procédé selon l'invention prévoit la réalisation d'un profilé P comprenant au moins deux semelles 46 reliées par au moins une âme 48 pleine de préférence.

Comme illustré par la section d'un profilé en figure 3, l'âme 48 est la partie sensiblement verticale et sensiblement rectangulaire du profilé P et les semelles 46 sont les parties sensiblement horizontales, sensiblement rectangulaires et sensiblement parallèles reliées par ladite âme.

Une telle conception du profilé P à au moins une âme 48 et au moins deux semelles 46 est susceptible de conférer au profilé les caractéristiques mécaniques minimales requises.

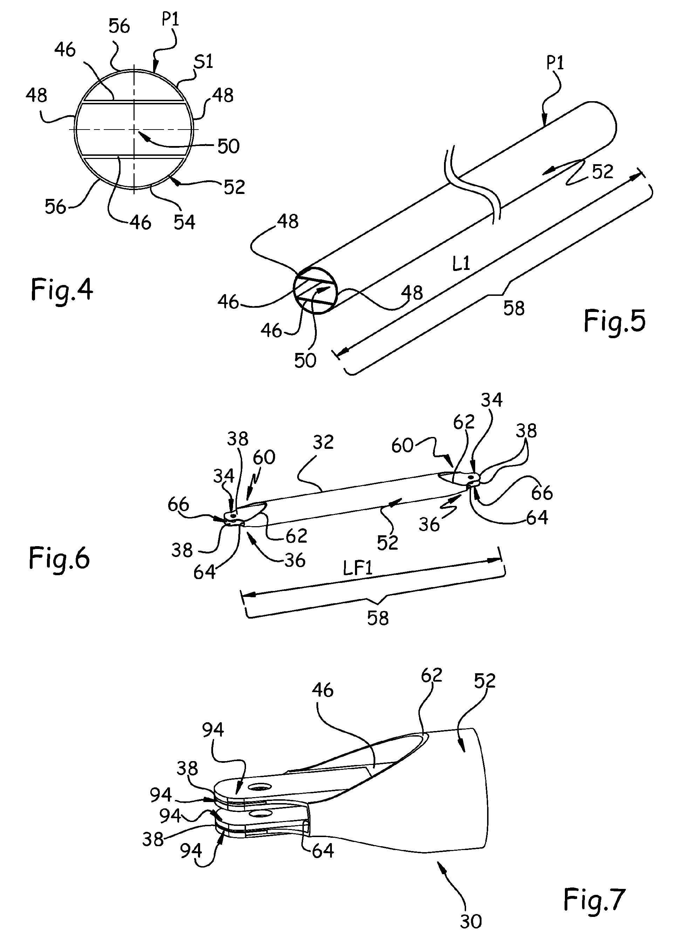

Cependant, dans un premier mode de réalisation préféré d'un profilé selon l'invention illustré sur les figures 4 à 7, ledit profilé P1 comprend au moins deux âmes 48 pleines reliant au moins deux semelles 46, ce qui permet de dégager la partie centrale 50 du profilé et d'améliorer ses caractéristiques mécaniques et notamment sa résistance au flambage.

Toujours dans ce premier mode de réalisation, le profilé P1 comprend aussi une enveloppe 52 extérieure de protection contre les impacts et les chocs divers. Ladite enveloppe 52 extérieure prend la forme d'une membrane 54 entourant les semelles 46 du profilé P1 et sensiblement continue en périphérie extérieure de la section S1 du profilé P1.

De préférence, ladite enveloppe 52 extérieure est cylindrique sur la longueur L1 dudit profilé P1.

Aussi, dans ce premier mode de réalisation préféré, au moins deux âmes 48 pleines reliant les semelles 46 font aussi partie intégrante de l'enveloppe 52 extérieure de protection.

Par conséquent, dans ce premier mode de réalisation préféré, les semelles 46 sont sensiblement plates tandis que les deux âmes 48 sont sensiblement incurvées en vis à vis et reliées par deux tronçons 56 incurvés formant le reste de l'enveloppe 52 extérieure.

Dans ce premier mode de réalisation préféré, consécutivement à la fabrication continue dudit profilé P1, et comme illustré sur les figures 5 à 7, le procédé de réalisation selon l'invention consiste au moins à :
- prélever une portion 58 de longueur L1 prédéterminée dans le profilé P1 en matériau composite,
- effectuer la découpe des chapes 34 à chaque extrémité 60 de ladite portion,
- réaliser les alésages 40 au travers desdites chapes découpées.

Avantageusement, la réalisation des alésages 40 dans les chapes 34 peut être effectuée au moment du montage de la pièce de liaison 30 dans l'assemblage auquel elle participe.

Plus en détails, la longueur L1 de profilé P1 prélevée dépend de la longueur finale LF1 à donner à la pièce de liaison 30, la longueur L1 prélevée pouvant être supérieure à la longueur finale LF1 pour faciliter la découpe ultérieure des chapes de la pièce de liaison.

Lesdites opérations de découpe consistent d'une part à effectuer des coupes en biseau 62 de l'enveloppe 52 extérieure au niveau des extrémités 60 de la longueur L1 de profilé P1 prélevée et de part et d'autre des semelles 46 dudit profilé P1, les coupes en biseau 62 étant sensiblement effectuées dans les tronçons 56 incurvés de l'enveloppe extérieure.

D'autre part, lesdites opérations de découpe consistent aussi à arrêter la ou les âmes 48 pleines du profilé P1 par des découpes droites 64 au droit des découpes en biseau 62 afin de dégager complètement les extrémités 66 des semelles 46 du profilé P1.

Enfin, lesdites opérations de découpe consistent aussi à donner leur forme finale aux oreilles 38 des chapes 34 de la pièce de liaison 30.

Lesdites oreilles 38 sont découpées dans les extrémités 66 des semelles 46 du profilé P1 sensiblement au-delà des découpes en biseau 62 de l'enveloppe 52 extérieure et des découpes droites 64 des âmes 48, lesdites oreilles prenant de préférence une forme arrondie.

On constate donc que ce premier mode de réalisation est particulièrement avantageux car il permet l'obtention d'une pièce de liaison 30, telle une bielle, dont le corps 32, les chapes 34 et l'enveloppe 52 de protection viennent simultanément de fabrication dans un même matériau composite.

Bien entendu, l'invention couvre également différentes variantes pouvant être imaginées à partir de ce premier mode de réalisation préféré.

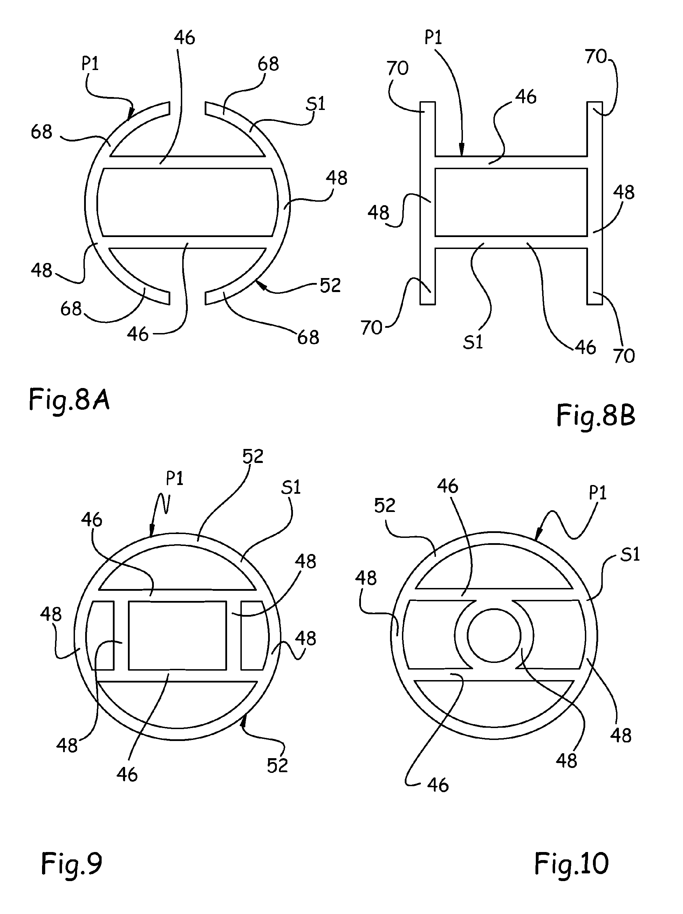

A titre d'exemple, la figure 8A illustre une première variante d'une section S1 d'un profilé P1 dans laquelle l'enveloppe 52 extérieure n'est pas continue et comprend seulement des extensions 68 incurvées prolongeant les âmes 48 pleines de part et d'autre des semelles 46.

De même, et comme illustré en figure 8B, l'invention couvre aussi une deuxième variante d'une section S1 d'un profilé P1 dans laquelle l'enveloppe 52 extérieure n'est pas continue et comprend seulement des extensions 70 droites prolongeant les âmes 48 pleines de part et d'autre des semelles 46.

La figure 9 illustre une troisième variante d'une section S1 d'un profilé P1 couverte par l'invention dans laquelle le profilé P1 comprend deux âmes 48 pleines centrales en plus des deux âmes 48 faisant partie de l'enveloppe 52 extérieure.

Enfin, l'invention couvre aussi une quatrième variante illustrée en figure 10 dans laquelle le profilé P1 comprend une âme 48 centrale creuse et sensiblement cylindrique en plus des deux âmes 48 faisant partie de l'enveloppe 52 extérieure.

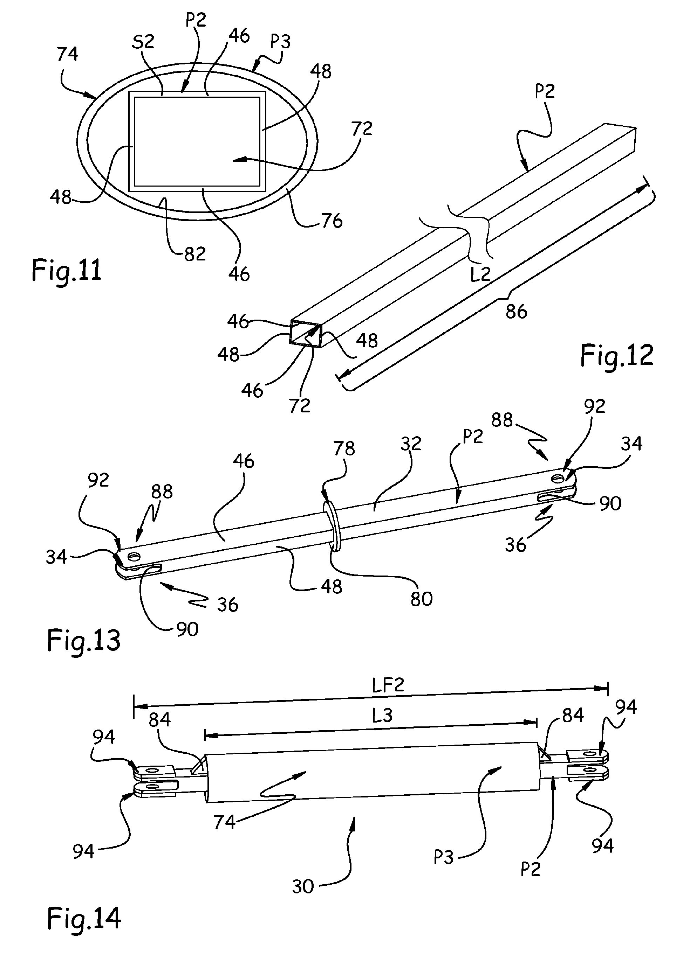

Dans un deuxième mode de réalisation préféré d'un profilé selon l'invention illustré sur les figures 11 à 14, la pièce de liaison 30 est réalisée à partir d'un premier profilé P2 comprenant au moins deux âmes 48 pleines reliant les semelles 46, ce qui permet comme précédemment de dégager la partie centrale 72 du profilé P2 et d'améliorer ses caractéristiques mécaniques et notamment sa résistance au flambage.

Dans ce deuxième mode de réalisation préféré, les deux semelles 46 sont sensiblement plates et parallèles et les deux âmes 48 sont aussi sensiblement plates et parallèles.

Toujours dans ce deuxième mode de réalisation préféré, le premier profilé P1 peut aussi recevoir une enveloppe 74 extérieure de protection contre les impacts et les chocs divers, ladite enveloppe 74 extérieure prenant la forme d'un deuxième profilé P3.

Ladite enveloppe 74 extérieure, soit le deuxième profilé P3, prend la forme d'une membrane 76 entourant les semelles 46 et la ou les âmes 48 du premier profilé P2 et sensiblement continue en périphérie extérieure de la section 52 du premier profilé P2.

De préférence, ladite enveloppe 74 extérieure, soit le deuxième profilé P3, est cylindrique sur la longueur L2 dudit premier profilé P2.

Aussi, dans ce deuxième mode de réalisation, ledit corps creux 32 et lesdites chapes 34 de la pièce de liaison 30, participant principalement à la reprise des efforts subis par la pièce de liaison, sont issus d'un unique premier profilé P2 en matériau composite, tandis que l'enveloppe 74 extérieure de protection est issue d'un deuxième profilé P3.

Ledit premier profilé P2 est obtenu par un processus de fabrication en continu.

Il est rappelé que, par profilé, l'invention entend une pièce de section constante produite en continu sur une seule ligne de production, les différentes opérations de la ligne de production du profilé étant réalisées les unes après les autres sans interruption.

De préférence, dans le procédé de réalisation selon l'invention, le processus de fabrication en continu dudit premier profilé P2 est la pultrusion consistant à tirer des fibres imprégnées d'une matrice au travers d'une filière chauffée où s'effectue la mise en forme des fibres et la polymérisation ou la fusion et le compactage de la matrice, les fibres utilisées étant des fibres à hautes performances, notamment des fibres de carbone, et la matrice employée est en polymère organique, de nature thermodurcissable, par exemple en époxyde, en polyuréthane, ou en vinylester, ou de nature thermoplastique.

Ledit deuxième profilé P3 formant l'enveloppe 74 extérieure peut aussi être obtenu par un processus de fabrication en continu tel la pultrusion.

Cependant, dans ce deuxième mode de réalisation préféré, l'enveloppe 74 extérieure ne participant pas à la reprise des efforts subis par la pièce de liaison 30, d'autres processus de fabrication peuvent être envisagés pour l'obtention de ce deuxième profilé P3.

A titre d'exemple, ledit deuxième profilé P3 peut être réalisé dans un matériau composite obtenu par tout autre moyen de transformation tel que l'enroulement filamentaire, le moulage autoclave, le moulage au contact, le moulage par injection sous vide et/ou basse pression, etc.

Ou bien, ledit deuxième profilé P3 peut être réalisé dans d'autres matériaux qu'un matériau composite, et par exemple dans un matériau métallique, ou plastique, etc.

Aussi, dans ce deuxième mode de réalisation préféré, des moyens de solidarisation 78 peuvent être prévus entre ledit premier profilé P2 et ledit deuxième profilé P3.

Ces moyens de solidarisation 78 ne sont pas forcément nécessaires et lesdits profilés P2 et P3 peuvent être ajustés dimensionnellement de manière à être en contact tout en glissant l'un par rapport à l'autre.

Toutefois, ces moyens de solidarisation 78 peuvent aussi prendre diverses formes connues de l'homme du métier et être portés par le premier et/ou le deuxième profilé.

Ainsi, ces moyens de solidarisation 78 peuvent consister en un ajustement dimensionnel des profilés P2 et P3 pour qu'ils soient en contact glissant puis en un encollage très localisé afin de les sceller en position l'un par rapport à l'autre. Ces moyens de solidarisation 78 peuvent aussi consister en au moins une entretoise 80 prévue autour du premier profilé P2 et de forme correspondant au contour intérieur 82 du deuxième profilé P3, et/ou en au moins une butée 84 rapportée sur ledit premier profilé P2 et arrêtant le deuxième profilé P3 en translation.

D'autres moyens de solidarisation 78 peuvent être prévus, comme par exemple l'injection d'une mousse entre les deux profilés P2 et P3.

Dans ce deuxième mode de réalisation préféré, consécutivement à la fabrication des premier et deuxième profilés, et comme illustré sur les figures 12 à 14, le procédé de réalisation selon l'invention consiste au moins à :
- prélever une portion 86 de longueur L2 prédéterminée dans le premier profilé P2 en matériau composite,
- effectuer la découpe des chapes 34 à chaque extrémité 88 de ladite portion,
- préparer le deuxième profilé P3 à une longueur L3 appropriée,
- rapporter ledit deuxième profilé P3 autour du premier profilé P2, notamment par l'intermédiaire des moyens de solidarisation 78,
- réaliser les alésages 40 au travers desdites chapes découpées.

Avantageusement, la réalisation des alésages 40 dans les chapes 34 peut être effectuée au moment du montage de la pièce de liaison dans l'assemblage auquel elle participe.

Plus en détails, la longueur L2 du premier profilé P2 prélevée dépend de la longueur finale LF2 de la pièce de liaison 30 ainsi réalisée, la longueur L2 prélevée pouvant être supérieure à la longueur finale LF2 pour faciliter la découpe ultérieure des chapes de la pièce de liaison.

De même, la longueur L3 du deuxième profilé dépend de la longueur finale LF2 de la pièce de liaison 30 ainsi réalisée, ladite longueur L3 étant de préférence ajustée à la longueur finale LF2 de manière à dégager les extrémités 88 et donc les chapes 34 du premier profilé P2.

D'une part, les opérations de découpe du premier profilé P2 consistent à arrêter les âmes 48 pleines du premier profilé P2 par des découpes droites 90 en retrait des extrémités 92 des semelles 46 dudit premier profilé.

D'autre part, lesdites opérations de découpe consistent aussi à donner leur forme finale aux oreilles 38 des chapes 34 de la pièce de liaison.

Lesdites oreilles 38 sont découpées dans les extrémités 92 des semelles 46 du profilé sensiblement au-delà des découpes droites 90 des âmes 48, lesdites oreilles 38 prenant de préférence une forme arrondie.

On constate que ce deuxième mode de réalisation est aussi avantageux car il permet l'obtention d'une pièce de liaison 30, telle une bielle, dont le corps 32 et les chapes 34 viennent simultanément de fabrication dans un même matériau composite, tandis que l'enveloppe 74 de protection peut être obtenue dans des matériaux et selon des procédés à très faibles coûts étant donné que ladite enveloppe 74 a principalement pour fonction la protection de la pièce de liaison contre les impacts.

Ladite enveloppe 74 peut néanmoins apporter un surcroît d'inertie en flexion augmentant encore la tenue de la bielle au flambage en compression.

Bien entendu, l'invention couvre également différentes variantes pouvant être imaginées à partir de ce deuxième mode de réalisation préféré.

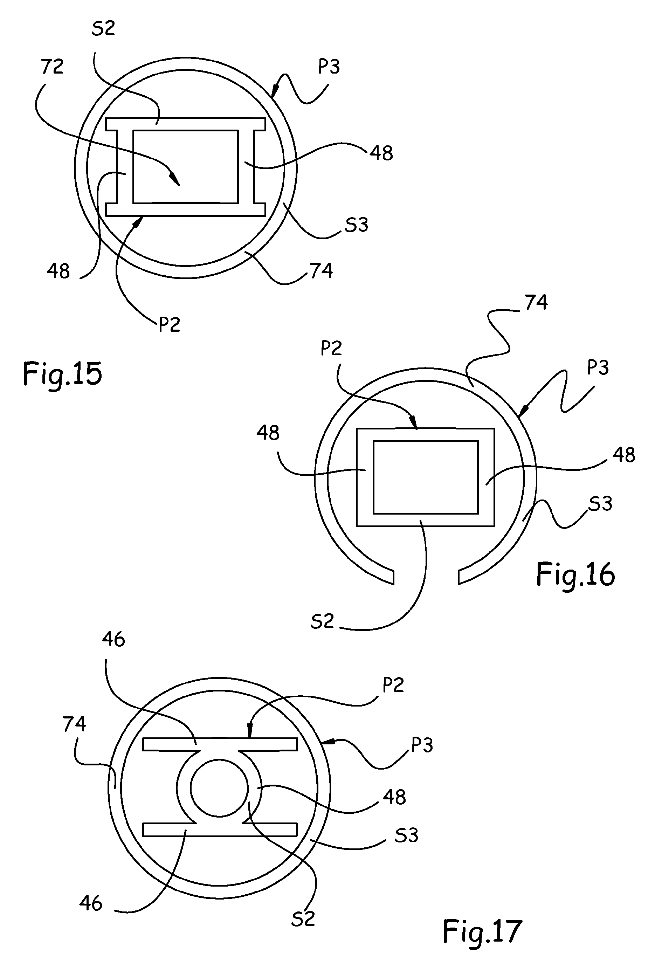

A titre d'exemple, la figure 15 illustre une première variante des sections (S2,S3) du premier et du deuxième profilé (P2,P3) dans laquelle les âmes 48 sont déplacées vers la partie centrale 72 du premier profilé P2.

De même, et comme illustré en figure 16, l'invention couvre aussi une deuxième variante des sections (S2,S3) du premier et du deuxième profilé (P2,P3) dans laquelle l'enveloppe 74 extérieure n'est pas continue.

Enfin, l'invention couvre aussi une troisième variante des sections (S2,S3) du premier et du deuxième profilé (P2,P3), illustrée en figure 17, dans laquelle le premier profilé P2 comprend une âme 48 centrale creuse et sensiblement cylindrique entre les deux semelles 46 du premier profilé.

Tant dans le premier que dans le deuxième mode de réalisation préféré, le procédé selon l'invention peut prévoir de rapporter des renforts 94 au niveau des oreilles 38 des chapes 34, ces renforts permettant d'augmenter la résistance des chapes aux pressions de matage ainsi que d'ajuster facilement l'épaisseur des oreilles 38 en fonction des dimensions des moyens de réception de l'assemblage auquel la pièce de liaison 30 est destinée.

De préférence, lesdits renforts 94 sont métalliques, prennent la forme des oreilles 38, sont solidarisés au premier profilé P2 par collage, et ils peuvent être percés simultanément à la réalisation des alésages 40 dans les oreilles 38 des chapes de la pièce de liaison.

Dans un mode de réalisation préféré, le procédé selon l'invention prévoit de disposer des renforts 94 de part et d'autre de chaque oreille 38 des chapes 34, comme illustré en figure 7.

Afin d'augmenter davantage les caractéristiques mécaniques de la pièce de liaison, le procédé selon l'invention peut aussi prévoir un remplissage du corps creux de la pièce de liaison, les différents profilés (P,P1,P2,P3) pouvant être remplis d'un matériau alvéolaire, de préférence à cellules fermées, ledit remplissage étant obtenu par injection d'une mousse ou de tout autre matériau de faible densité.

Bien entendu, l'invention couvre aussi toute pièce de liaison, telle une bielle, réalisée selon le procédé selon l'invention, ainsi que toutes les utilisations d'une pièce de liaison réalisée selon l'invention, comme par exemple son utilisation dans une partie d'un aéronef ne faisant pas partie de sa structure ou dans d'autres structures que celle d'un aéronef.

## Revendications

1. Procédé de réalisation d'une pièce de liaison (30), notamment une bielle d'un aéronef, en matériau composite, ladite pièce de liaison comprenant au moins un corps (32) creux et au moins une chape (34) au niveau de chacune des extrémités (36) dudit corps (32), **caractérisé en ce que** ledit corps (32) et lesdites chapes (34) de la pièce de liaison (30) sont issues d'un unique profilé (P,P1,P2) en matériau composite obtenu par un processus de fabrication en continu.

2. Procédé de réalisation d'une pièce de liaison (30), notamment une bielle d'un aéronef, en matériau composite selon la revendication 1, **caractérisé en ce que** le profilé (P,P1,P2) comprend au moins deux semelles (46) reliées par au moins une âme (48) pleine.

3. Procédé de réalisation d'une pièce de liaison (30), notamment une bielle d'un aéronef, en matériau composite selon la revendication 2, **caractérisé en ce que** le profilé (P1) comprend une enveloppe (52) extérieure de protection.

4. Procédé de réalisation d'une pièce de liaison (30), notamment une bielle d'un aéronef, en matériau composite selon la revendications 3, **caractérisé en ce que** l'enveloppe (52) extérieure prend la forme d'une membrane (54) entourant les semelles (46) du profilé (P1) et continue en périphérie extérieure de la section (S1) du profilé (P1).

5. Procédé de réalisation d'une pièce de liaison (30), notamment une bielle d'un aéronef, en matériau composite selon la revendication 4, **caractérisé en ce que** ladite enveloppe (52) extérieure est cylindrique sur la longueur (L1) dudit profilé (P1).

6. Procédé de réalisation d'une pièce de liaison (30), notamment une bielle d'un aéronef, en matériau composite selon l'une des revendications 3 à 5, **caractérisé en ce que** le profilé (P1) comprend au moins deux âmes (48) pleines reliant au moins deux semelles (46), et **en ce qu'**au moins deux âmes (48) pleines reliant les semelles (46) font partie intégrante de l'enveloppe (52) extérieure de protection.

7. Procédé de réalisation d'une pièce de liaison (30), notamment une bielle d'un aéronef, en matériau composite selon l'une des revendications 3 à 6, **caractérisé en ce que** les semelles (46) sont plates.

8. Procédé de réalisation d'une pièce de liaison (30), notamment une bielle d'un aéronef, en matériau composite selon l'une des revendications 3 à 7, **caractérisé en ce qu'**il consiste au moins à :
- prélever une portion (58) de longueur (L1) prédéterminée dans le profilé (P1) en matériau composite,
- effectuer la découpe des chapes (34) à chaque extrémité (60) de ladite portion,
- réaliser les alésages (40) au travers desdites chapes découpées.

9. Procédé de réalisation d'une pièce de liaison (30), notamment une bielle d'un aéronef, en matériau composite selon la revendication 8, **caractérisé en ce que** les opérations de découpe consistent à effectuer des coupes en biseau (62) au niveau des extrémités (60) de la longueur (L1) de profilé (P1) prélevée et de part et d'autre des semelles (46) dudit profilé (P1), à arrêter la ou les âmes (48) pleines du profilé (P1) par des découpes droites (64) au droit des découpes en biseau (62), et à donner leur forme finale aux oreilles (38) des chapes (40) de la pièce de liaison (30).

10. Procédé de réalisation d'une pièce de liaison (30), notamment une bielle d'un aéronef, en matériau composite selon la revendication 2, **caractérisé en ce que** le premier profilé (P2) comprend au moins deux âmes (48) pleines reliant les semelles (46).

11. Procédé de réalisation d'une pièce de liaison (30), notamment une bielle d'un aéronef, en matériau composite selon la revendication 10, **caractérisé en ce que** les deux semelles (46) sont plates et parallèles.

12. Procédé de réalisation d'une pièce de liaison (30), notamment une bielle d'un aéronef, en matériau composite selon la revendication 10 ou 11, **caractérisé en ce que** le premier profilé (P2) reçoit une enveloppe (74) extérieure de protection contre les impacts, et **en ce que** ladite enveloppe (74) extérieure prend la forme d'un deuxième profilé (P3).

13. Procédé de réalisation d'une pièce de liaison (30), notamment une bielle d'un aéronef, en matériau composite selon la revendication 12, **caractérisé en ce que** ladite enveloppe (74) extérieure, soit le deuxième profilé (P3), prend la forme d'une membrane (76) entourant les semelles (46) et la ou les âmes (48) du premier profilé (P2) et continue en périphérie extérieure de la section (S2) du premier profilé (P2).

14. Procédé de réalisation d'une pièce de liaison (30), notamment une bielle d'un aéronef, en matériau composite selon la revendication 13, **caractérisé en ce que** ladite enveloppe (74) extérieure, soit le deuxième profilé (P3), est cylindrique sur la longueur (L2) dudit premier profilé (P2).

15. Procédé de réalisation d'une pièce de liaison (30), notamment une bielle d'un aéronef, en matériau composite selon l'une des revendications 12 à 14, **caractérisé en ce que** des moyens de solidarisation (78) sont prévus entre ledit premier profilé (P2) et ledit deuxième profilé (P3).

16. Procédé de réalisation d'une pièce de liaison (30), notamment une bielle d'un aéronef, en matériau composite selon la revendication 15, **caractérisé en ce que** les moyens de solidarisation (78) consistent en au moins une entretoise (80) prévue autour du premier profilé (P2) et de forme correspondant au contour intérieur (82) du deuxième profilé (P3), et/ou en au moins une butée (84) rapportée sur ledit premier profilé (P2) et arrêtant le deuxième profilé (P3) en translation.

17. Procédé de réalisation d'une pièce de liaison (30), notamment une bielle d'un aéronef, en matériau composite selon la revendication 15, **caractérisé en ce que** les moyens de solidarisation (78) consistent en un ajustement dimensionnel des profilés (P2) et (P3) pour qu'ils soient en contact glissant puis en un encollage localisé afin de les sceller en position l'un par rapport à l'autre.

18. Procédé de réalisation d'une pièce de liaison, notamment une bielle d'un aéronef, en matériau composite selon l'une des revendications 12 à 17, **caractérisé en ce qu'**il consiste au moins à :
- prélever une portion (86) de longueur (L2) prédéterminée dans le premier profilé (P2) en matériau composite,
- effectuer la découpe des chapes (34) à chaque extrémité (88) de ladite portion,
- préparer le deuxième profilé (P3) à une longueur (L3) appropriée,
- rapporter ledit deuxième profilé (P3) autour du premier profilé (P2), notamment à l'aide des moyens de solidarisation (78),
- réaliser les alésages (40) au travers desdites chapes (34) découpées.

19. Procédé de réalisation d'une pièce de liaison, notamment une bielle d'un aéronef, en matériau composite selon la revendication 18, **caractérisé en ce que** les opérations de découpe du premier profilé (P2) consistent à arrêter les âmes (48) pleines du premier profilé (P2) par des découpes droites (90) en retrait des extrémités (92) des semelles (46) dudit premier profilé, et à donner leur forme finale aux oreilles (38) des chapes (34).

20. Procédé de réalisation d'une pièce de liaison, notamment une bielle d'un aéronef, en matériau composite selon l'une des revendications 1 à 19, **caractérisé en ce que** ledit profilé est obtenu par pultrusion.

21. Procédé de réalisation d'une pièce de liaison (30), notamment une bielle d'un aéronef, en matériau composite selon l'une des revendications 1 à 20, **caractérisé en ce qu'**il prévoit de rapporter des renforts (94) au niveau desdites chapes (38).

## Patentansprüche

1. Verfahren zur Herstellung eines Verbindungsstücks (30), insbesondere einer Stange eines Luftfahrzeuges, aus Verbundmaterial, wobei das Verbindungsstück wenigstens einen Hohlkörper (32) und wenigstens ein Gabelgelenk (34) im Bereich der beiden Enden (36) des Körper (32) aufweist, **dadurch gekennzeichnet, dass** der Körper (32) und die Gabelgelenke (34) des Verbindungsstücks (30) aus einem einzigen Profil (P, P1, P2) aus Verbundmaterial hervorgegangen sind, das durch einen kontinuierlichen Herstellungsvorgang erhalten worden ist.

2. Verfahren zur Herstellung eines Verbindungsstücks (30), insbesondere einer Stange eines Luftfahrzeuges, aus Verbundmaterial nach Anspruch 1, **dadurch gekennzeichnet, dass** das Profil (P, P1, P2) wenigstens zwei Flansche (46) aufweist, die durch wenigstens einen Vollsteg (48) verbunden ist.

3. Verfahren zur Herstellung eines Verbindungsstücks (30), insbesondere einer Stange eines Luftfahrzeuges, aus Verbundmaterial nach Anspruch 2, **dadurch gekennzeichnet, dass** das Profil (P1) eine äußere Schutzhülle (52) aufweist.

4. Verfahren zur Herstellung eines Verbindungsstücks (30), insbesondere einer Stange eines Luftfahrzeuges, aus Verbundmaterial nach Anspruch 3, **dadurch gekennzeichnet, dass** die äußere Hülle (52) als Membran (54) ausgestaltet ist, die die Flansche (46) des Profils (P1) umgibt und sich entlang dem äußeren Umfang des Querschnitts (S1) des Profils (P1) fortsetzt.

5. Verfahren zur Herstellung eines Verbindungsstücks (30), insbesondere einer Stange eines Luftfahrzeuges, aus Verbundmaterial nach Anspruch 4, **dadurch gekennzeichnet, dass** die äußere Hülle (52) über die Länge (L1) des Profils (P1) hinweg zylindrisch ist.

6. Verfahren zur Herstellung eines Verbindungsstücks (30), insbesondere einer Stange eines Luftfahrzeuges, aus Verbundmaterial nach einem der Ansprüche 3 bis 5, **dadurch gekennzeichnet, dass** das Profil (P1) wenigstens zwei Vollstege (48) aufweist, die wenigstens zwei Flansche (46) verbinden, und das die wenigstens zwei Vollstege (48), die die Flansche (46) verbinden, einen integralen Bestandteil der äußeren Schutzhülle (52) bilden.

7. Verfahren zur Herstellung eines Verbindungsstücks (30), insbesondere einer Stange eines Luftfahrzeuges, aus Verbundmaterial nach einem der Ansprüche 3 bis 6, **dadurch gekennzeichnet, dass** die Flansche (46) flach ausgebildet sind.

8. Verfahren zur Herstellung eines Verbindungsstücks (30), insbesondere einer Stange eines Luftfahrzeuges, aus Verbundmaterial nach einem der Ansprüche 3 bis 7, **dadurch gekennzeichnet, dass** dieses wenigstens darin besteht:
- einen Abschnitt (58) von vorbestimmter Länge (L1) vom Profil (P1) aus Verbundmaterial abzulängen,
- ein Zuschneiden der Gabelgelenke (34) an beiden Enden (60) des Abschnitts durchzuführen und
- Durchführungen (40) durch die Gabelgelenke zu bewerkstelligen.

9. Verfahren zur Herstellung eines Verbindungsstücks (30), insbesondere einer Stange eines Luftfahrzeuges, aus Verbundmaterial nach Anspruch 8, **dadurch gekennzeichnet, dass** die Schneidevorgänge darin bestehen, im Bereich der Enden (60) der Länge (L1) des abgelängten Profils (P1) und beidseits der Flansche (46) des Profils (P1) Fasenschnitte (62) auszuführen, den Vollsteg oder die Vollstege (48) durch rechtwinklige Schnitte (64) in Höhe der Fasenschnitte (62) zu begrenzen, und den Ohren (38) der Gabelgelenke (40) des Verbindungsstücks (30) die abschließende Form zu geben.

10. Verfahren zur Herstellung eines Verbindungsstücks (30), insbesondere einer Stange eines Luftfahrzeuges, aus Verbundmaterial nach Anspruch 2, **dadurch gekennzeichnet, dass** das erste Profil (P2) wenigstens zwei Vollstege (48) aufweist, die die Flansche (46) verbinden.

11. Verfahren zur Herstellung eines Verbindungsstücks (30), insbesondere einer Stange eines Luftfahrzeuges, aus Verbundmaterial nach Anspruch 10, **dadurch gekennzeichnet, dass** die beiden Flansche (46) flach und parallel sind.

12. Verfahren zur Herstellung eines Verbindungsstücks (30), insbesondere einer Stange eines Luftfahrzeuges, aus Verbundmaterial nach Anspruch 10 oder 11, **dadurch gekennzeichnet, dass** das erste Profil (P2) eine äußere Hülle (74) zum Schutz gegen Stöße erhält, und dass die äußere Hülle (74) als zweites Profil (P3) ausgebildet ist.

13. Verfahren zur Herstellung eines Verbindungsstücks (30), insbesondere einer Stange eines Luftfahrzeuges, aus Verbundmaterial nach Anspruch 12, **dadurch gekennzeichnet, dass** die äußere Hülle (74) oder das zweite Profil (P3) als Membran (76) ausgestaltet ist, das die Flansche (46) und den Steg oder die Stege (48) des ersten Profils (P2) umgibt und sich entlang dem äußeren Umfang des Querschnitts (S2) des ersten Profils (P2) fortsetzt.

14. Verfahren zur Herstellung eines Verbindungsstücks (30), insbesondere einer Stange eines Luftfahrzeuges, aus Verbundmaterial nach Anspruch 13 **dadurch gekennzeichnet, dass** die äußere Hülle (74) oder das zweite Profil (P3) über die Länge (L2) des ersten Profils (P2) hinweg zylindrisch ist.

15. Verfahren zur Herstellung eines Verbindungsstücks (30), insbesondere einer Stange eines Luftfahrzeuges, aus Verbundmaterial nach einem der Ansprüche 12 bis 14, **dadurch gekennzeichnet, dass** zwischen dem ersten Profil (P2) und dem zweiten Profil (P3) Anbringmittel (78) vorgesehen sind.

16. Verfahren zur Herstellung eines Verbindungsstücks (30), insbesondere einer Stange eines Luftfahrzeuges, aus Verbundmaterial nach Anspruch 15, **dadurch gekennzeichnet, dass** die Anbringmittel (78) aus wenigstens einer Querstütze (80), die um das erste Profil (P2) herum vorgesehen ist und deren Form dem inneren Umriss (82) des zweiten Profils (P3) entspricht, und/oder aus wenigstens einem Längsträger (84) bestehen, der am ersten Profil (P2) angebracht ist und das zweite Profil (P3) in Translationsrichtung hält.

17. Verfahren zur Herstellung eines Verbindungsstücks (30), insbesondere einer Stange eines Luftfahrzeuges, aus Verbundmaterial nach Anspruch 15, **dadurch gekennzeichnet, dass** die Anbringmittel (78) in einer Anpassung der Profile (P2) und (P3) bezüglich der Abmessungen bestehen, so dass diese im gleitenden Kontakt stehen, und dann in einem örtlichen Verkleben bestehen, um die gegenseitige Position festzulegen.

18. Verfahren zur Herstellung eines Verbindungsstücks, insbesondere einer Stange eines Luftfahrzeuges, aus Verbundmaterial nach einem der Ansprüche 12 bis 17, **dadurch gekennzeichnet, dass** dieses darin besteht:
- einen Abschnitt (86) von vorbestimmten Länge (L2) vom ersten Profil (P2) aus Verbundmaterial abzulängen,
- an beiden Enden (88) des Abschnitts den Fasenschnitt (34) auszuführen,
- das zweite Profil (P3) mit einer geeigneten Länge (L3) bereitzustellen,
- das zweite Profil (P3) um das erste Profil (P2) herum insbesondere mit Hilfe von Anbringmitteln (78) anzubringen und
- Durchführungen (40) durch die zugeschnittene Gabelgelenke (34) auszubilden.

19. Verfahren zur Herstellung eines Verbindungsstücks, insbesondere einer Stange eines Luftfahrzeuges, aus Verbundmaterial nach Anspruch 18, **dadurch gekennzeichnet, dass** die Vorgänge des Zuschneidens des ersten Profils (P2) darin bestehen, die Vollstege (48) des ersten Profils (P2) durch rechtwinklige Schnitte (90) zur Verjüngung der Enden (92) der Flansche (46) des ersten Profils zu begrenzen und den Ohren (38) der Gabelgelenke (34) ihre endgültige Form zu geben.

20. Verfahren zur Herstellung eines Verbindungsstücks, insbesondere einer Stange eines Luftfahrzeuges, aus Verbundmaterial nach einem der Ansprüche 1 bis 19, **dadurch gekennzeichnet, dass** das Profil durch Strangziehen hergestellt wird.

21. Verfahren zur Herstellung eines Verbindungsstücks (30), insbesondere einer Stange eines Luftfahrzeuges, aus Verbundmaterial nach einem der Ansprüche 1 bis 20, **dadurch gekennzeichnet, dass** dieses vorsieht, im Bereich der Gabelgelenke (38) Verstärkungen (94) anzubringen.

## Claims

1. Method for producing a connecting part (30), particularly a connecting rod of an aircraft, made of composite material, said connecting part comprising at least one hollow body (32) and at least one yoke (34) at each of the ends (36) of said body (32), **characterized in that** said body (32) and said yokes (34) of the connecting part (30) are derived from a single profile (P, P1, P2) of composite material obtained by a continuous manufacturing process.

2. Method for producing a connecting part (30), particularly a connecting rod of an aircraft, of composite material according to Claim 1, wherein the profile (P, P1, P2) comprises at least two flanges (46) connected by at least one solid web (48).

3. Method for producing a connecting part (30), particularly a connecting rod of an aircraft, of composite material according to Claim 2, wherein the profile (P1) comprises a protective outer shell (52).

4. Method for producing a connecting part (30), particularly a connecting rod of an aircraft, of composite material according to Claim 3, wherein the outer shell (52) assumes the shape of a membrane (54) that surrounds the flanges (46) of the profile (P1) and continues on the outer periphery of the cross-section (S1) of the profile (P1).

5. Method for producing a connecting part (30), particularly a connecting rod of an aircraft, of composite material according to Claim 4, wherein said outer shell (52) is cylindrical over the length (L1) of said profile (P1).

6. Method for producing a connecting part (30), particularly a connecting rod of an aircraft, of composite material according to one of Claims 3 to 5, wherein the profile (P1) comprises at least two solid webs (48) connecting at least two flanges (46), and wherein at least two solid webs (48) connecting the flanges (46) are an integral part of the protective outer shell (52).

7. Method for producing a connecting part (30), particularly a connecting rod of an aircraft, of composite material according to one of Claims 3 to 6, wherein the flanges (46) are flat.

8. Method for producing a connecting part (30), particularly a connecting rod of an aircraft, of composite material according to one of Claims 3 to 7, wherein it consists in at least:
- selecting a portion (58) of predetermined length (L1) from the profile (P1) of composite material,
- performing the cutting of the yokes (34) at each end (60) of said portion,
- making the bores (40) through said cut yokes.

9. Method for producing a connecting part (30), particularly a connecting rod of an aircraft, of composite material according to Claim 8, wherein the cutting operations consist in making tapered cuts (62) at the ends (60) of the length (L1) of selected profile (P1) and on both sides of the flanges (46) of said profile (P1), in stopping the solid web or webs (48) of the profile (P1) by straight cuts (64) at right angles with the tapered cuts (62), and in giving their final shape to the lugs (38) of the yokes (40) of the connecting part (30).

10. Method for producing a connecting part (30), particularly a connecting rod of an aircraft, of composite material according to Claim 2, wherein the first profile (P2) comprises at least two solid webs (48) connecting the flanges (46).

11. Method for producing a connecting part (30), particularly a connecting rod of an aircraft, of composite material according to Claim 10, wherein the two flanges (46) are flat and parallel.

12. Method for producing a connecting part (30), particularly a connecting rod of an aircraft, of composite material according to Claim 10 or 11, wherein the first profile (P2) receives an outer shell (74) for protection against impacts, and wherein said outer shell (74) assumes the shape of a second profile (P3).

13. Method for producing a connecting part (30), particularly a connecting rod of an aircraft, of composite material according to Claim 12, wherein said outer shell (74), or the second profile (P3), assumes the shape of a membrane (76) surrounding the flanges (46) and the web or webs (48) of the first profile (P2) and continues on the outer periphery of the cross-section (S2) of the first profile (P2).

14. Method for producing a connecting part (30), particularly a connecting rod of an aircraft, of composite material according to Claim 13, wherein said outer shell (74), or the second profile (P3), is cylindrical over the length (L2) of said first profile (P2).

15. Method for producing a connecting part (30), particularly a connecting rod of an aircraft, of composite material according to one of Claims 12 to 14, wherein attaching means (78) are provided between said first profile (P2) and said second profile (P3).

16. Method for producing a connecting part (30), particularly a connecting rod of an aircraft, of composite material according to Claim 15, wherein the attaching means (78) consist in at least one collar (80) provided around the first profile (P2) and of a shape corresponding to the inside contour (82) of the second profile (P3), and/or in at least one stop (84) attached to said first profile (P2) and that stops the second profile (P3) in translation.

17. Method for producing a connecting part (30), particularly a connecting rod of an aircraft, of composite material according to Claim 15, wherein the attaching means (78) consist in a dimensional adjustment of the profiles (P2) and (P3) so that they are in sliding contact, and then in a very localized gluing so as to bond them in position relative to one another.

18. Method for producing a connecting part, particularly a connecting rod of an aircraft, of composite material according to one of Claims 12 to 17, wherein it consists in at least:
- selecting a portion (86) of predetermined length (L2) from the first profile (P2) of composite material,
- performing the cutting of the yokes (34) at each end (88) of said portion,
- preparing the second profile (P3) at an appropriate length (L3),
- attaching said second profile (P3) around the first profile (P2), particularly using attaching means (78),
- making the bores (40) through said cut yokes (34).

19. Method for producing a connecting part, particularly a connecting rod of an aircraft, of composite material according to Claim 18, wherein the cutting operations of the first profile (P2) consist in stopping the solid webs (48) of the first profile (P2) by straight cuts (90) recessed from the ends (92) of the flanges (46) of said first profile, and in giving their final shape to the lugs (38) of the yokes (34).

20. Method for producing a connecting part, particularly a connecting rod of an aircraft, of composite material according to one of Claims 1 to 19, wherein said profile is obtained by pultrusion.

21. Method for producing a connecting part (30), particularly a connecting rod of an aircraft, of composite material according to one of Claims 1 to 20, wherein it foresees adding reinforcing pieces (94) at the level of said yokes (38).
